# EUROPEAN PATENT APPLICATION

(11) **EP 1 505 505 A1**
(43) Date of publication of application: **09.02.2005**
(21) Application number: 03018145.7
(22) Date of filing: 08.08.2003
(51) Int. Cl.: G06F 11/273

(54) **Method and System for Remotely Diagnosing Devices**

(71) Applicant: Sony International (Europe) GmbH, 10785 Berlin (DE)
(72) Inventor: Szucs, Paul, c/o Stuttgart Technology Center, Hedelfinger Strasse 61, 70327 Stuttgart (DE); Clanget, Ulrich, c/o Stuttgart Technology Center, Hedelfinger Strasse 61, 70327 Stuttgart (DE); Mayer, Matthias, c/o Stuttgart Technology Center, Hedelfinger Strasse 61, 70327 Stuttgart (DE)
(74) Representative: Müller - Hoffmann & Partner

(57) **Abstract**

A method for diagnosing devices via a remote testing device (1) which is connectable to devices to be diagnosed (3) via a communication network (2) is described. The diagnosing is performed by exchanging diagnostic information between the remote testing device (1) and the devices to be tested (3) via the communication network (2). The process of exchanging diagnostics information is coordinated/performed by SOAP modules (6a, 6b) being located in the remote testing device (1) and the devices to be tested (3), respectively.

## Description

The invention relates to a method, a remote testing device, a device and a system for remotely diagnosing devices.

Remote diagnosis is primarily used to obtain information about a device remotely over the Internet in order to detect errors, to analyze their causes, and, if possible, to repair them, for example by software upgrade or correcting user settings.

To perform remote diagnosis, a communication protocol in order to exchange diagnostics information between a remote testing device and devices to be tested is needed. A first possible communication protocol could be a protocol being directly based upon TCP/IP and a socket layer interface, wherein a certain predefined port is used for remote diagnosis messaging. In this approach, two communication partners communicate via a simple client server protocol, namely a service center back end and a device under test (DUT, also referred to as device to be tested/diagnosed). A service center back end can request information, thereby acting as a client, whereas the DUT provides information, thereby acting as a server. The advantage of this approach is its simplicity; a simple mechanism is provided to execute remote diagnostic operations over the Internet which can be regarded as a basic "diagnostic RPC (Remote Procedure Call)". A disadvantage of this approach is that it is not based upon standardized RPC mechanisms and therefore requires additional implementation and development effort in order to realize the necessary RPC infrastructure.

A second possible communication protocol could be SNMP (Simple Network Management Protocol) which is a standardized IP-based protocol. This protocol is often used for remote diagnosis and controlling of network devices and equipment. However, it is quite complicated to implement since its utilization for remote diagnosis requires the definition of an associated management information block (MIB). This blocks are cumbersome and error-prone.

A third example of a communication protocol is described in the pending patent application of the same applicant (referenced by S01P5132EP00/PAE01-067HN). This approach proposes to create a new XML dialect, the remote diagnosis markup language (RDML) in order to provide a generic framework for remote diagnosis and manipulation of a device. The disadvantage of this approach is that the direct application of XML message exchange between a remote testing device and the devices to be tested implies a high software overhead for parsing XML scripts/files in the devices to be tested. This disadvantage does not exist, if devices to be tested are required to perform such parsing at the outset

It is an object of the present invention to provide a method for diagnosing devices which shows a high flexibility while at the same time requires a minimum of implementation effort.

To solve this object, the present invention provides a method for diagnosing devices according to claim 1. Further, the invention provides a remote testing device according to claim 8. Also, the present invention provides a device according to claim 11. Further, the present invention provides a system for remotely diagnosing devices according to claim 16. Last, a computer program product and a computer-readable storage means according to claims 17 and 18 are provided. Further features and preferred embodiments of the present invention are defined in respective sub claims.

According to the present invention, the method for diagnosing devices uses a remote testing device which is connectable to devices to be diagnosed via a communication network. The remote diagnosing is performed by exchanging diagnostics information between the remote testing device and the devices to be tested via the communication network. An important aspect of the present invention is that the process of exchanging diagnostics information is coordinated/performed by SOAP-modules being located in the remote testing device and in the devices to be tested, respectively.

SOAP (simple object access protocol) is a software product which enables a program running in one kind of operating system to communicate with a program in the same or another kind of operating system by using an appropriate communication protocol, in particular HTTP (hypertext transfer protocol) and XML (extensible markup language) as mechanisms for an information exchange. The application of SOAP offers a very efficient architecture for remote diagnosis, since its RPC mechanism fits very well into the needs of remote diagnosis. SOAP seems to become a very important standard for underlying communication mechanisms with respect to web based services. As a consequence, remote diagnosis applications using SOAP can be easily integrated into or combined with other web applications. SOAP is very useful for web service messaging and invocation and defines mechanisms to realize RPCs over the Internet. It is a wide spreading technology which even covers items like security, no protocol framework has to be implemented (XML-parsing, module deployment, HTTP messaging, etc.). Therefore, when deploying SOAP in the field of remote diagnosis, development efforts can be focussed on the implementations of remote diagnostic operations itself, and not on the communication mechanisms underlying said diagnostic operations.

As already mentioned, theoretically arbitrary communication protocols could be used to realize the exchange of diagnostics information. Preferably, SOAP modules use HTTP/XML transport protocols to exchange SOAP files (scripts) which include the diagnostics information. The diagnostics information is preferably encapsulated within tag structures being part of said SOAP files. For example, diagnose read/write/command information is exchanged by using read/write/command tag structures containing the diagnose read/write/command information. That is, each type of diagnostics information is encapsulated within its own tag structure. A further example may be to exchange diagnose response information by using response tag structures containing diagnose response information.

Upon reception of received SOAP files, the SOAP modules being located in the devices to be diagnosed extract diagnostics information being contained within the received SOAP files. The extracted diagnostics information is interpreted by the SOAP modules which are also responsible for initiating corresponding diagnostics tasks/read/write operations. Upon completion of diagnosing procedures, the SOAP modules being located in the devices to be diagnosed encapsulate diagnostics information generated by/stored within the devices to be diagnosed into SOAP files and send them back to the remote testing device. The term "diagnostic task" includes diagnostic procedures running within the device to be diagnosed as well as simple read/write operations performed by the remote testing device and fault message related operations, etc..

To perform the above described method, it is necessary that the devices to be tested/diagnosed (also only referred to as "devices") as well as the remote testing device comprise specific functionality, respectively. Therefore, the present invention provides a remote testing device being connectable to devices to be diagnosed via a communication network, the remote testing device comprising communication means for sending/receiving diagnostics information to/from the devices to be diagnosed. The communication means comprises a SOAP client module which performs/coordinates said sending/receiving processes of diagnostics information.

Preferably, the SOAP client module uses HTTP/XML transport (communication) protocols for sending/receiving the diagnostics information as SOAP files. The SOAP client module may for example be realized as a software module installed within the remote testing device. Preferably, the SOAP client module comprises extracting means for extracting diagnostics information from the SOAP files and/or embedding means for encapsulating diagnostics information into the SOAP files.

The invention further provides a device being connectable to a remote testing device via a communication network, the device comprising communication means for sending/receiving diagnostics information to/from the remote testing device. The communication means comprises a SOAP server module which performs/coordinates the sending/receiving of the diagnostics information.

The SOAP client module may use HTTP/XML transport (communication) protocols for sending/receiving the diagnostics information in form of SOAP files. Preferably, the device comprises diagnosing means being connected to the communication means for executing diagnostics tasks in dependence of the diagnostics information. The SOAP server may comprise extracting means for extracting the diagnostics information from the SOAP files and/or embedding means for embedding diagnostics information for example generated during the execution of a diagnostic process into the SOAP files.

It is advantageous to employ a communication protocol converting means within the device in order to transfer the diagnostics information from/to the SOAP files to/from a device specific diagnose protocol if remote diagnostics procedures can be handled in a more effective way when using individual diagnose protocols.

The present invention further provides a system for remotely diagnosing devices which comprises a remote testing device according to the present invention, and at least one device to be diagnosed according to the present invention, wherein the remote testing devices and the devices to be diagnosed are respectively connected via the communication network which preferably is the Internet.

Finally, the present invention provides a computer program product comprising computer program means adapted to perform the method steps according to the present invention or any part thereof when it is executed on a computer, a digital signal processor or the like. Further, a computer readable storage means for storing a computer program product according to the present invention is provided.

In the following description, further features and preferred embodiments of the present invention will be discussed while making reference to the accompanying drawings, wherein:
- **Fig. 1**: shows a schematic drawing illustrating a system of a remote testing device and a device to be diagnosed according to the present invention;
- **Fig. 2**: shows a preferred embodiment of a software layer architecture used within the devices to be diagnosed and the remote testing device according to the present invention, respectively;
- **Fig. 3**: shows a schematic drawing of a communication process between a remote testing device and a device to be diagnosed according to the present invention.

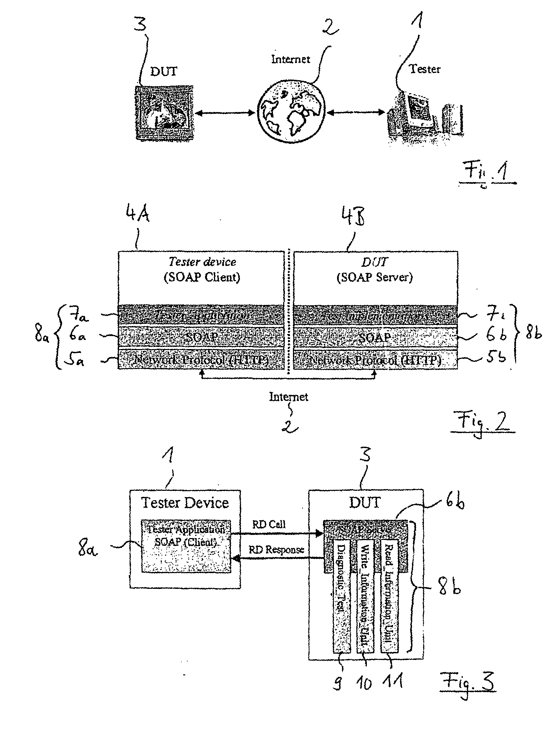

In the following description, making reference to Fig. 1. the principle of the communication between a remote testing device and a device to be tested will be described.

A remote testing device 1, for example a computer, is linked via an IP-based network connection, for example the Internet 2, to a device to be tested/diagnosed 3, also referred to as "DUT" (device under test). The remote testing device 1 sends diagnostics information which has been encapsulated by a SOAP client located therein into SOAP files via the IP-based network connection 2 to the DUT 3. A SOAP server being located within the DUT 3 extracts the diagnostics information from the SOAP files, interprets it and performs corresponding diagnostic tasks. For example, data stored within the DUT 3 is read out, old data stored in the DUT 3 is replaced by new data, or test result data generated during a self-diagnostic process is collected. Required diagnostics information is encapsulated into SOAP files and transferred from the DUT 3 via the IP-based network connection 2 back to the remote testing device 1. To perform the diagnostics information exchanging processes, appropriate communication protocols ( e.g. HTTP/XML) are used as diagnostics information carrier/SOAP file carrier.

In a Fig. 2 a first part 4A and a second part 4B of a software layer architecture is shown. The first part 4A of said architecture comprises a network protocol layer 5a which is the lowest layer, and a SOAP client layer 6a which uses the network protocol layer 5a to perform its tasks. Further, a tester application layer 7a is provided which performs the remote diagnosis tasks by making use of functionality included within the SOAP client layer 6a. For example, the tester application layer 7a wants to read out status data from a DUT 3. To do this, the tester application layer 7a instructs the SOAP client layer 6a to generate a respective readout instruction. The SOAP layer generates a corresponding SOAP file which includes this instruction, wherein the network protocol layer 5a sends this SOAP file via the Internet to the DUT 3. Within the DUT 3, a second part 4B of the software layer architecture is located which comprises a network protocol layer 5, a SOAP server layer 6b which makes use of the network protocol layer 5b to perform its tasks, and a test implementation layer 7b which may use the SOAP server layer 6b to perform its tasks. The received SOAP file is transferred to the SOAP server layer 6b via the network protocol layer 5b, wherein the SOAP server layer 6b extracts the diagnostics information contained within the SOAP file and transfers this information to the test implementation layer 7b which executes corresponding diagnostic tasks (for example, initiating diagnostic tests and collecting corresponding, generated test result data, reading out data already stored within the DUT 3, replacing old data by new data derived from the SOAP file, etc.). The result of these diagnostic tasks are passed to the SOAP server layer 6b which encapsulates this information in a SOAP file which is sent back by the network protocol layer 5b to the remote testing device 1. There, the network protocol layer 5a receives the SOAP file, wherein the SOAP client layer 6a extracts corresponding diagnostics information from the SOAP file and passes this information to the tester application layer 7a. The tester application layer 7a processes this information and, for example, displays it to an user of the remote testing device 1.

Fig. 3 shows the principles of a communication process between a remote testing device 1 and a device to be tested 3 according to the present invention. Within the remote testing device 1, a first software module 8a is located which comprises the network protocol layer 5a, the SOAP client layer 6a and the tester application layer 7a. The first software module 8a sends a remote diagnosis call to a second software module 8b being located within the DUT 3. The second software layer 8b comprises a SOAP server layer 6b which is linked to three further software layers, namely a diagnostic test layer 9, a write information layer 10, and a read information layer 11. If diagnostic information received by the SOAP server layer 6b contains command information for initiating a diagnostic test, this information will be passed to the diagnostic test layer 9, which performs the test and collects corresponding results. The results are then transferred as diagnostic information encapsulated within a SOAP file back to the first software package 8a of the remote testing device 1. If the diagnostic information received by the SOAP server layer 6b comprises information to be written into a storage of the DUT 3, this information is passed to the write information layer 10 which executes this task. Accordingly, if the diagnostics information received by the SOAP server layer 6b contains a command to read information from a storage of the DUT 3, this command will be passed to the read information layer 11 which reads out corresponding diagnostics information. The read out diagnostics information is then transferred back to the first software packet 8a of the remote testing device 1.

The invention can also be expressed as follows:

The current invention is advantageous in terms of efficiency of implementation. The direct application of XML message exchange between tester and DUT implies a high software overhead for the parsing of XML scripts in the DUT. This is not a problem where the device is required to perform such parsing at the outset. But if this is not necessarily the case, the application of SOAP offers a much more efficient architecture for remote diagnosis. Another advantage is that SOAP is rapidly becoming the de-facto standard for underlying communications mechanism for web based services. Remote diagnosis applications that utilize SOAP could therefore be more easily integrated into or combined with other web applications.

The following description explains how Remote diagnosis is realized by the use of SOAP. It describes which diagnostic operations are defined and how these operations are realized with SOAP RPCs.

Figure 2 shows the general architecture of Remote diagnosis using SOAP. The DUT is implemented as a SOAP Server that provides Diagnostic operations as services to the Tester. The Tester implements a SOAP Client that invokes the Diagnostic operations provided by the DUT and evaluates the results that are returned.

In the following, some remote diagnosis operations will be explained. The functionality for Remote diagnosis is required to be generic. Therefore necessary operations have to be identified and an appropriate API has to be defined. There are different types of information that could be retrieved from a device when error detection and analysis has to be performed. This information concerns the DUT's settings and its operational state but also log data that report the history of operations that lead to an error. All these various kinds of information are summarized under the term "Diagnosis Information Unit".

There are also special diagnostic tests routines that could be executed on a device to detect errors.

After analysis of retrieved information and executed tests there are three possible ways to solve problems or treat errors:
1. Hardware Problem: defect parts must be replaced or repaired.
2. Software Bug: The current software could be replaced by a newer version that fixes that bug.
3. No Problem Found: The user could be advised about how to operate the device correctly.
4. Faulty Settings: The faulty setting could be set to a correct value.
5. Wrong State: The wrong state could be changed to a correct state.

Only items 4 and 5 belong to the range of remote diagnosis and concern Information Units. Therefore operations for writing Information Units (write settings and change operational states) are needed.

For each category of remote diagnosis operation there is one operation in the remote diagnosis API.

As defined previously there are two kinds of remote diagnosis Information Unit operations. One is for reading and one for writing an Information Unit. "Read_Information_Unit" is the operation for reading an Information Unit. An Information Unit could be a setting, an operational state or a log file. The parameter "name" specifies the name of the Information Unit. Additional information is passed in parameter "parameter", in order to make restrictions to the information that should be retrieved.

Example: When certain recordings of a recording list of a Hard Disk Recorder are retrieved it could be specified to return only those recordings that lie between a certain time intervals.

The parameter "result" defines the result of the operation in the sense of success or error. If the operation is successful, the detailed result is found in "result_data". In case that huge amount of binary data has to be transmitted (recording list, log file, picture, etc.) it is advisable to use SOAP Attachments [2] by appending these data to the SOAP message and referring the attachment.

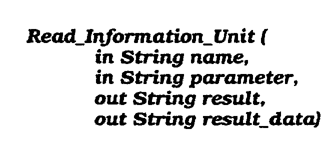

The following listings show the Request and the Response of the corresponding SOAP-RPC.

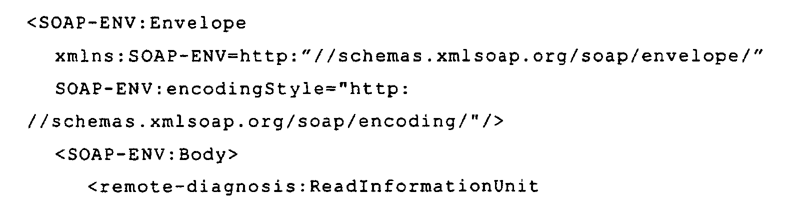

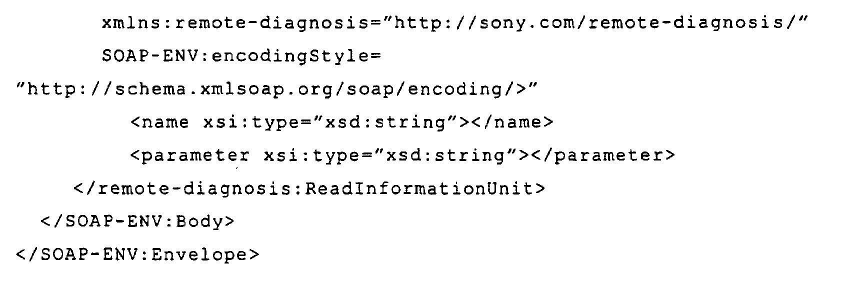

### Listing 1 Read_information_Unit SOAP request.

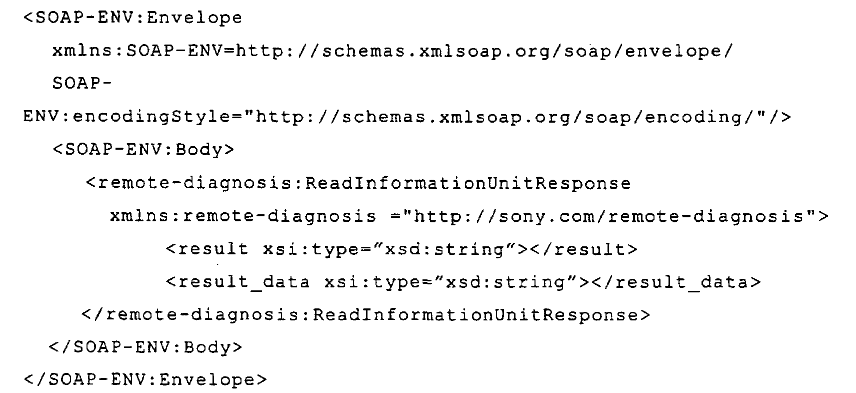

### Listing 2 Read_information_Unit SOAP response.

"Write_Information_Unit" is the operation to write an Information Unit. An Information Unit could be a setting or an operational state. The parameter "name" specifies the name of the Information Unit. Additional information is passed in parameter "parameter", in order to make restrictions to the Information Unit to be retrieved.

The parameter "write_data" contains the data that should replace the old data. In case that a huge amount of data has to be transmitted this data could added as an SOAP attachment to the message.

The parameter "result" confirms the success of the operation or indicated that an error occurred.

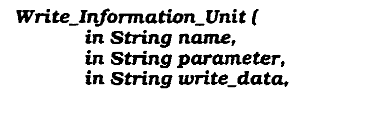

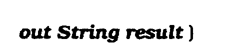

The following listings show the Request and the Response of the corresponding SOAP-RPC.

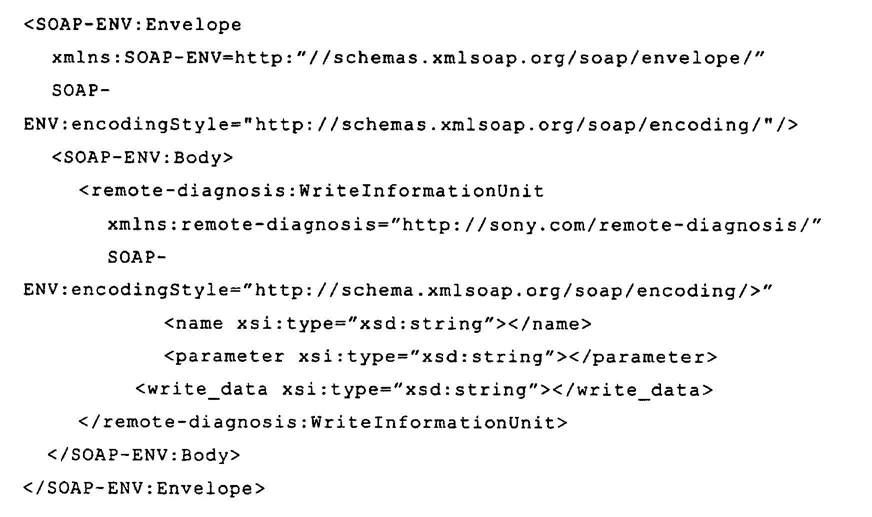

### Listing 3 Write_information_Unit SOAP request.

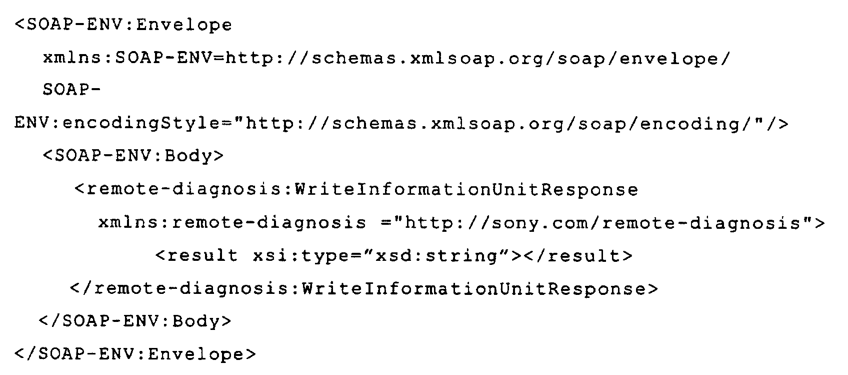

### Listing 0.4 Write_Information_Unit SOAP response.

A Diagnostic Test operation is used to execute a special test routine on the DUT. This kind of operation hasn't any relation to reading and writing settings, operational states or log data. Mostly these test routines have specially implemented checkups like hardware tests.

The parameter "name" specifies the name of the diagnostic test. Additional information is passed in parameter "test_data", in order to parameterize the test routine. In case that a huge amount of data has to be transmitted this data could added as an SOAP Attachment [2] to the message.

The parameter "result" confirms the success of the operation or indicated that an error occurred. If the operation is successful detailed result information are found in "result_data". In case that a huge amount of data has to be transmitted it is advisable to use SOAP Attachments [2] by appending these data to the SOAP message and referring the attachment.

Example: Test the functioning of the antenna signal of a receiver.

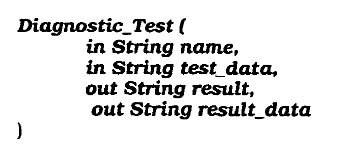

The following listings show the Request and the Response of the corresponding SOAP-RPC.

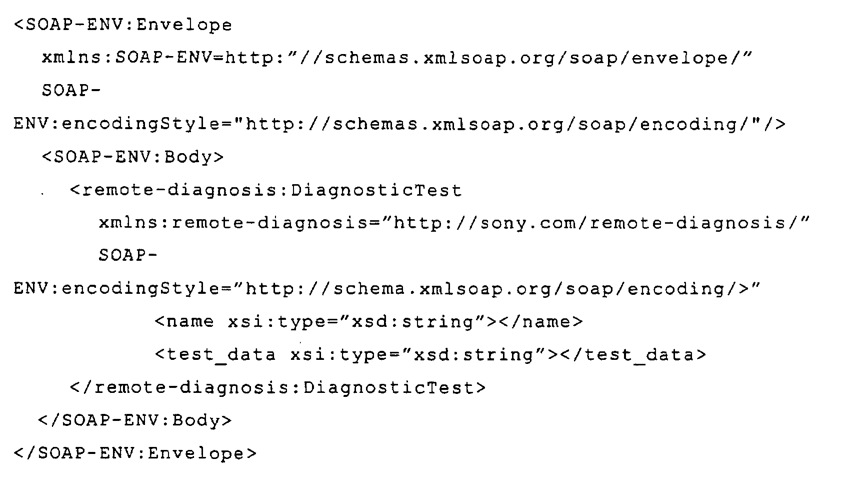

### Listing 5 Diagnostic_Test SOAP request.

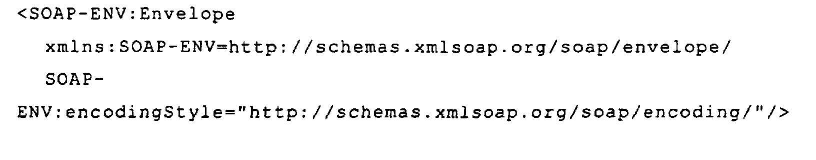

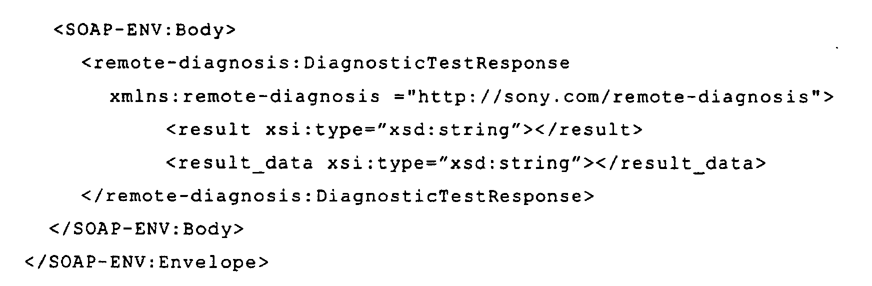

### Listing 6 Diagnostic_Test SOAP response.

Services have to be deployed to the SOAP Server (Microsoft .Net, Apache Axis, SOAPLite, etc.) that is installed on the DUT. After the deployment the SOAP Server is performing the parsing of incoming SOAP messages and dispatches the extracted parameters to the corresponding Remote diagnosis operation. The SOAP Server does the response generation (XML-encoding and HTTP messaging) automatically depending on the result of the Remote diagnosis operation.

Thus, the work to be done is the deployment of a Remote diagnosis Service and the implementation of Remote diagnosis operations, so that these operations become available to Testers. Figure 3 illustrates a SOAP Server with deployed Remote diagnosis operations.

If an error occurs while executing a Remote diagnosis operation, a SOAP Fault Message is sent as response. The mandatory fault sub element faultcode is set to SOAP-ENV:Client and indicates that the message was not correct. Information about the exact reason of the error is placed in the faultstring and the detail sub element. Depending on the Remote diagnosis operation these elements can take one of the following tables.

There are faults that are in common for all For Information Unit operations. These faults are listed in table 6.1. Table 6.2 lists faults that concern the writing of Information Units and table 6.3 lists all faults that concern Diagnostic Tests.

**Table 1**

| **General Information Unit Fault Codes** | |
|---|---|
| **Detail** | **Description** |
| InformationUnit.Unknown | No Information Unit corresponds to the name that has been specified in the command. |
| InformationUnit.InvalidParameter | The parameter that has been specified in the command has been wrong. |

**Table 2**

| **Write Information Unit Fault Codes** | |
|---|---|
| **Detail** | **Description** |
| InformationUnit.Write.ReadOnly | The Information Unit is read only. |
| InformationUnit.Write.InvalidWriteData | The write data are not valid. |

**Table 3**

| **Diagnostic Test Fault Codes** | |
|---|---|
| **Detail** | **Description** |
| DiagnosticTest. Unknown | No Diagnostic Test corresponds to the name that has been specified in the Command. |
| DiagnosticTest.lnvalidTestData | The test data are not valid. |

The following listings show the Fault message of the corresponding SOAP-RPC.

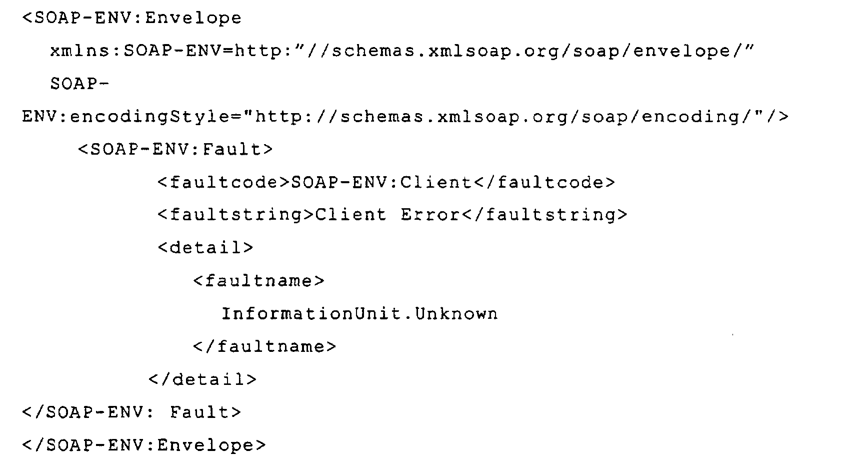

### Listing 7 Fault message.

The following description is about how Remote diagnosis operations are mapped to SOAP RPCs.

SOAP is transport protocol independent and can be bound to any protocol type but HTTP is the most commonly used protocol for the transport of SOAP messages. SOAP maps to the HTTP request/response message model. SOAP RPC-calls are mapped to the HTTP-POST request and SOAP RPC-responses or faults are mapped to a HTTP-response.

HTTPS could be used to secure SOAP messaging.

The URI of the request is set to /RemoteDiagnosis for a Remote diagnosis operation call. The header content type is set to ***text*/*xml***. The header character set is ***utf* - *8***. The header SOAP action is set to ***"http:* //*sony. com*/*remotediagnosis "*.**
POST /RemoteDiagnosis HTTP/1.1
Content-Type: text/xml; charset="utf-8"
Content-Length: nnnn
SOAPAction: "http://sony.com/remotediagnosis"

### Listing 8 Remote diagnosis Request.

A successful response to a Remote diagnosis operation call is mapped to a HTTP response with status code 200 OK - the request has succeeded (POST an entity describing or containing the result of the action).
HTTP/1.1 200 OK
Content-Type: text/xml; charset="utf-8"
Content-Length: nnnn

### Listing 9 Remote diagnosis Responses.

In the case of a SOAP-fault or a Remote diagnosis Fault an HTTP 500 response is generated.
HTTP/1.1 500 Internal Server Error
Content-Type: text/xml; charset="utf-8"
Content-Length: nnnn

### Listing 9 Remote diagnosis Fault.

This section shows the message and the port type definitions of the Remote diagnosis functionality.

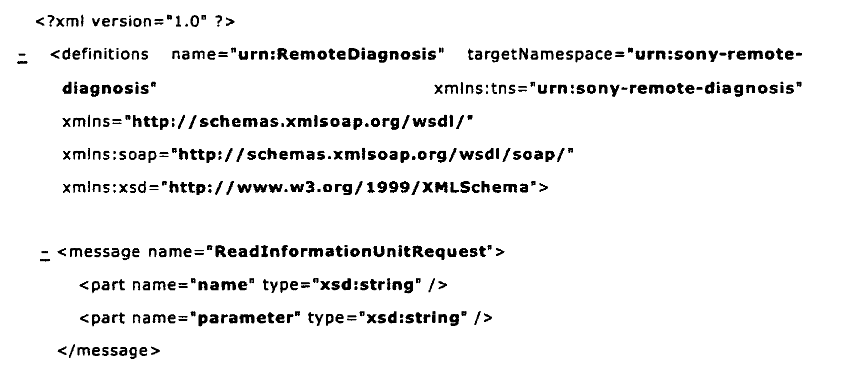

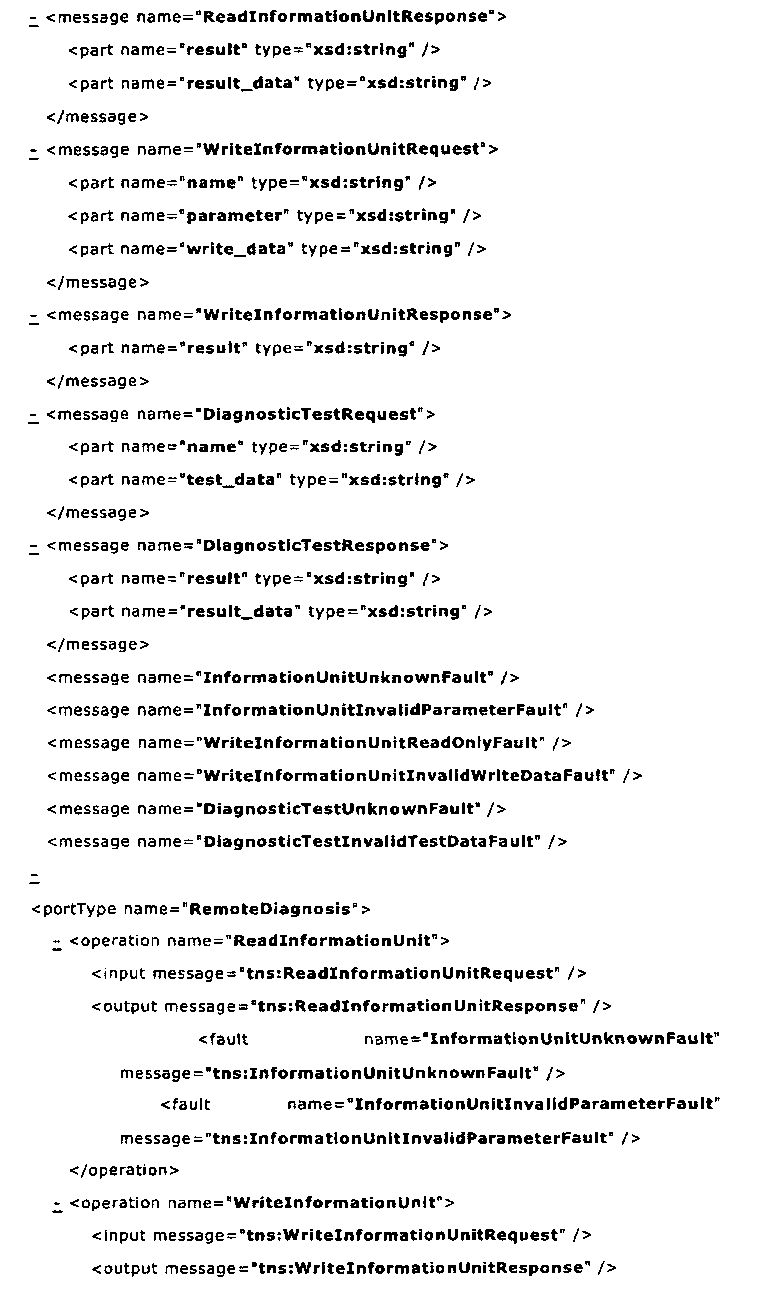

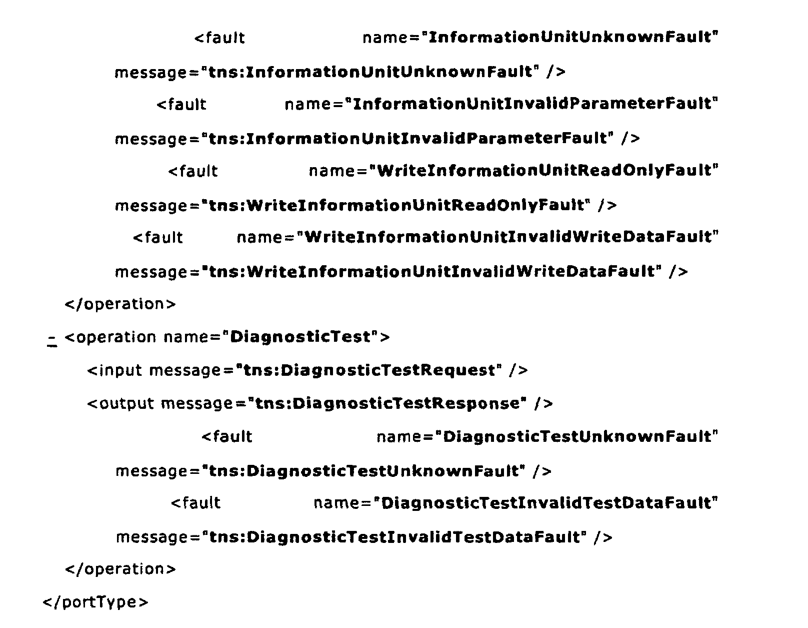

### Listing 10 WSDL for Remote diagnosis

As has become apparent, the present invention describes a possibility to enable a computer system to remotely diagnose a device over standard Internet protocol (HTTP) in a most efficient and interoperable manner. A SOAP-RPC mechanism for remote invocation of diagnosis operations and definition of remote diagnosis API is used. The use of an available SOAP engine eases the implementation effort on the DUT and allows the use of SOAP developement tools. Only the API needed for remote diagnosis and the "mapping" to SOAP has to be defined and implemented. SOAP is directly used as RPC environment. This reduces the implementation of remote diagnosis functionality to the implementation of the diagnosis tests and commands.

It is known to use a central node for translationg a SOAP message into a SNMP message. The SNMP message is forwarded to the controlled dievice; SOAP is "abused" for HTTP tunneling. This, however, requres a "fat" server being available in the network, which should not be the case if devices within home networks are addressed. SOAP tunneling the firewall by using the HTTP port number is reduced. This would be superfluous in remote diagnosis if a special port would be assigned. This port could be opened in the firewall.

SOAP provides a complete RPC environment that will be available (as lightweight implementation) on consumer electronic devices. Thus, it is not necessary to implement a server for the translation of SOAP calls to other protocols. And to reimplement a RPC environment.

### References

- [1] XML: Extensible Markup Language (XML) 1.0 (Second Edition) http://www.w3.org/TR1/2000/REC-xml-20001006
- [2] SOAP: Simple Object Access Protocol (SOAP) 1.1 http://www.w3.org/SOAP/
- [3] SOAP Attachments: SOAP Messages with Attachments http://www.w3.org/TR/SOAP-attachments
- [4] WSDL: Web Services Description Language (WSDL) 1.1 http://www.w3.org/TR/wsdl

### Abbreviations

- DUT: Device Under Test
- HTTP: Hypertext Transfer Protocol
- RPC: Remote Procedure Call
- SOAP: Simple Object Access Protocol
- XML: Extensible Markup Language
- HTTPS: Hypertext Transfer Protocol over Secure Socket Layer
- TCP/IP: Transmission Control Protocol / internet Protocol
- API: Application Program Interface

### Refernce Symbols

- 1: Remote testing device
- 2: Communication network
- 3: Device to be diagnosed/tested
- 4A: First part of software architecture
- 4B: Second part of software architecture
- 5a,b: Network protocol layer
- 6a: SOAP client layer
- 6b: SOAP server layer
- 7a: Tester application layer
- 7b: Test implementation layer
- 8a: First software module
- 8b: Second software module
- 9: Diagnostic test layer
- 10: Write information layer
- 11: Read information layer

## Claims

1. Method for diagnosing devices via a remote testing device (1) which is connectable to devices (3) to be diagnosed via a communication network (2), wherein said diagnosing is performed by exchanging diagnostics information between said remote testing device (1) and said devices to be tested (3) via said communication network (2),
**characterized in**
**that** said process of exchanging diagnostics information is coordinated/performed by SOAP modules (6a, 6b) being located in said remote testing device (1) and in said devices to be tested (3), respectively.

2. Method according to claim 1, **characterized in that** said SOAP modules (6a, 6b) use HTTP/XML transport protocols to exchange SOAP files which include said diagnostics information.

3. Method according to claim 2, **characterized in that** said SOAP files comprise tag structures which respectively contain parts of said diagnostics information.

4. Method according to claim 3, **characterized in that** diagnose read/write/command information is exchanged by using read/write/command tag structures containing said diagnose read/write/command information.

5. Method according to any one of the claims 3 or 4, **characterized in that** diagnose response information is exchanged by using response tag structures containing diagnose response information.

6. Method according to any one of the claims 2 to 5, **characterized in** said SOAP modules (6a, 6b) in said devices to be diagnosed (3) extract diagnostics information from received SOAP files, interpret said extracted information, and initiate corresponding diagnostics tasks.

7. Method according to any one of the claims 2 to 6, **characterized in that** said SOAP modules (6a, 6b) in said devices to be diagnosed (3) encapsulate diagnostics information generated by/stored within said devices to be diagnosed into SOAP files and send them to said remote testing device (1).

8. Remote testing device (1) being connectable to devices to be diagnosed (3) via a communication network (2), said remote testing device comprising communication means (8a) for sending/receiving diagnostics information to/from said devices to be diagnosed (3), **characterized in that** said communication means (8a) comprises a SOAP client module (6a) which performs/coordinates said sending/receiving of said diagnostics information.

9. Remote testing device (1) according to claim 8, **characterized in that** said SOAP client module (6a) uses HTTP/XML transport protocols for sending/receiving said diagnostics information as SOAP files.

10. Remote testing device (1) according to claim 9, **characterized in that** said SOAP client-module (6a) comprises extracting means for extracting said diagnostics information from said SOAP files and/or embedding means for encapsulating said diagnostics information into said SOAP files.

11. Device (3) being connectable to a remote testing device (1) via a communication network (2), said device (3) comprising communication means (8b) for sending/receiving diagnostics information to/from said remote testing device (1), **characterized in that** said communication means (8b) comprises a SOAP server module (6b) which performs/coordinates said sending/receiving of said diagnostics information.

12. Device (3) according to claim 11, **characterized in that** said SOAP server module (6b) uses HTTP/XML transport protocols for sending/receiving said diagnostics information as SOAP files.

13. Device (3) according to claim 11 or 12, **characterized by** diagnosing means (9, 10, 11) being connected to said communication means (8b) for executing diagnostics tasks in dependence of said diagnostics information.

14. Device (3) according to any one of the claims 11 to 13, **characterized in that** said SOAP server module (6b) comprises extracting means for extracting said diagnostics information from said SOAP files and/or embedding means for embedding said diagnostics information into said SOAP files.

15. Device (3) according to any one of the claims 11 to 14, **characterized by** communication protocol converting means for transferring said diagnostics information from/to said SOAP files to/from a device-specific diagnose protocol.

16. System for remotely diagnosing devices,
**characterized by**
- a remote testing device (1) according to any one of the claims 8 to 10, and
- at least one device to be diagnosed (3) according to any one of the claims 11 to 15, wherein said remote testing device (1) and said at least one device to be diagnosed (3) are respectively connected via said communication network (2).

17. Computer program product comprising computer program means adapted to perform the method steps according to any one of claims 1 to 7 or any part thereof when it is executed on a computer, digital signal processor or the like.

18. Computer readable storage means adapted to store a computer program product according to claim 17.
